# EUROPEAN PATENT APPLICATION

(11) **EP 1 538 446 A2**
(43) Date of publication of application: **08.06.2005**
(21) Application number: 04028676.7
(22) Date of filing: 03.12.2004
(51) Int. Cl.: G01N 35/02, G01N 35/10

(54) **Automatic analyzer and analysis method**

(30) Priority: 05.12.2003 JP 2003406681
(71) Applicant: Hitachi High-Technologies Corporation, Tokyo 105-8717 (JP)
(72) Inventor: Yamazaki, Isao, Hitachi High-Technologies Corpor., Hitachinaka-shi Ibaraki 312-8504 (JP); Nishida, Masaharu, Hitachi High-Technologies Corp., Hitachinaka-shi Ibaraki 312-8504 (JP)
(74) Representative: Strehl Schübel-Hopf & Partner

(57) **Abstract**

An automatic analyzer having a high processing capability even when plural kinds of reagents are dispensed at different timings. The automatic analyzer comprises a plurality of reaction cells, a reaction cell moving unit for moving the plurality of reaction cells at a certain cycle; a sample dispensing unit for dispensing a sample into a reaction cell on the reaction cell moving unit, a reagent dispensing unit for dispensing plural kinds of reagents to be added during a sample - reagent reaction process at different timings, the number of the reagent addition timings being larger than the number of times at which the reagents can be dispensed within a time of one cycle, and a control unit for controlling the sample dispensing unit to set a cycle in which no sample is dispensed by the sample dispensing unit, when analyses each using the reagent to be dispensed at the latest one of the reagent addition timings by the reagent dispensing unit succeed a predetermined number of times or more.

## Description

### BACKGROUND OF THE INVENTION

### 1. Field of the Invention

The present invention relates to an automatic analyzer for performing quantitative and qualitative analyses of components in a biological sample, such as blood and urine, and more particularly to an automatic analyzer provided with a mechanism for dispensing plural kinds of reagents, which are to be added at different timings, by using the same reagent dispensing probe.

### 2. Description of the Related Art

In an automatic analyzer for mixing a biological sample, such as blood and urine, with reagents in a reaction cell, and measuring a reaction solution to analyze items to be examined for the sample, a reagent dispensing probe is generally employed to supply the reagents from respective reagent bottles to the reaction cell.

Patent Reference 1; JP,A 2003-21645, for example, discloses a method of adding reagents to a reaction cell in correspondence to items to be examined. More specifically, reaction cells are arranged in a circular pattern on a rotatable reaction table, a sample is dispensed into one reaction cell at one position on the reaction table by using a sample probe, and reagents are dispensed into the reaction cell at three positions. According to this known method, a reagent which is to be first added to the sample, i.e., a first reagent, is dispensed at one of the three reagent dispensing positions by using a probe dedicated for the first reagent, while a second reagent to be second added to the sample and a third reagent to be next added to the sample are dispensed at the remaining two reagent dispensing positions by using one reagent probe. The kinds of required reagents differ depending on the kinds of analysis items such that some items require only the first and second reagents, other items require only the first and third reagents, and still other items require all of the reagents. During one operation cycle of the analyzer, the sample probe and the two reagent probes are able to dispense the sample and the reagents once at the respective positions on the reaction table. The reaction table is rotated for each operation cycle such that the reaction cell changes its position on the reaction table where it is stopped. The reaction cell having been located at a sample dispensing position in one operation cycle moves to a first reagent dispensing position after 2 cycles, a second reagent dispensing position after 17 cycles, and a third reagent dispensing position after 48 cycles.

In the related art mentioned above, taking into account the fact that the second reagent and the third reagent are not always used for all analysis items, one reagent probe is used in common to dispense the second reagent and the third reagent. Therefore, a compacter structure and a cost reduction of the analyzer can be realized. Note that the above description is made only by way of example for easier understanding, and a fourth reagent is further used in some analyzers.

### SUMMARY OF THE INVENTION

With the method disclosed in Patent Reference 1, in view of the fact that the second reagent and the third reagent are not always used for all analysis items, those reagents are dispensed at the second reagent dispensing position and the third reagent dispensing position by using one reagent probe. Looking it from the other side, the disclosed method is not adapted for the case of an analysis item in which the second reagent and the third reagent must be dispensed during one cycle. If separate reagents probes dedicated for the second reagent and the third reagent are provided to avoid the above-mentioned problem, the analyzer would be complicated in structure, and the size and cost of the analyzer would be increased. If the reagent dispensing is performed twice during one cycle, another problem of a reduction in analysis processing speed would arise.

It is an object of the present invention to provide an automatic analyzer capable of suppressing a reduction in processing capability regardless of the sequence of requested analysis items even when the analyzer is provided with a mechanism for dispensing plural kinds of reagents, which are to be added at different timings, by using the same reagent dispensing probe.

To achieve the above object, the present invention is constructed as follows.

The automatic analyzer comprises a plurality of reaction cells; a reaction cell moving unit for moving the plurality of reaction cells at a certain cycle; a sample dispensing unit for dispensing a sample into a reaction cell on the reaction cell moving unit; a reagent dispensing unit for dispensing plural kinds of reagents to be added during a sample - reagent reaction process at different timings, the number of the reagent addition timings being larger than the number of times at which the reagents can be dispensed within a time of one cycle; and a control unit for controlling the sample dispensing unit to set a cycle in which no sample is dispensed by the sample dispensing unit, when analyses each using the reagent to be dispensed at the latest one of the reagent addition timings by the reagent dispensing unit succeed a predetermined number of times or more.

That construction of the present invention can be expressed in another way as given below.

The automatic analyzer comprises a plurality of reaction cells; a sample probe for injecting a sample into a reaction cell; a reagent disk capable of holding a plurality of reagent bottles; a reagent probe for sucking a reagent from one of the plurality of reagent bottles and injecting the sucked reagent into the reaction cell; and a detector for measuring characteristics of a liquid in the reaction cell. The automatic analyzer operates in units of cycle with a certain period through steps of injecting one sample into one reaction cell per cycle as a basic manner, injecting reagents into the reaction cell, into which the sample has been injected, by using the reagent probe in each of cycles after the lapse of a reagent injection setting time defined for each of the reagents, and measuring the characteristics of the liquid after a predetermined reaction time, thereby analyzing the concentration of a particular component in the sample. When the number of different reagent injection setting times (i.e., the number of different reagent injection timings) at which the reagents are to be injected by at least one reagent probe is larger than the number of times at which the reagents can be dispensed by the reagent probe within a time of one cycle, and analyses each using the reagent having the longest reagent injection setting time (i.e., the reagent to be dispensed at the latest timing) succeed over a predetermined upper limit in the number of allowable successive cycles, a cycle in which no sample is injected is inserted.

Preferably, the predetermined upper limit in the number of allowable successive cycles is changeable.

Preferably, the predetermined upper limit in the number of allowable successive cycles is automatically changed depending on the kinds of reagents placed on the reagent disk.

More preferably, the reagent probe is provided in plural, and the predetermined upper limit in the number of allowable successive cycles can be set to a different value for each of the plural reagent probes.

In addition, preferably, the reaction cells are arranged along a circumference of a reaction disk, the reaction disk is rotated through a certain angle per cycle, and the reagent probe dispenses the reagents into the reaction cells at plural positions on the reaction disk.

According to the present invention, even when there are mixed analyses requiring reagents to be dispensed at a plurality of different timings, cycles in which analysis is infeasible are avoided from succeeding over a large number, and therefore a high-speed automatic analyzer with high analysis efficiency can be provided.

### BRIEF DESCRIPTION OF THE DRAWINGS

Fig. 1 is a perspective view of an automatic analyzer according to one embodiment of the present invention;
Fig. 2 is a flowchart for decision steps executed in the embodiment; and
Fig. 3 is a chart for explaining an example of the operation in the embodiment.

### DESCRIPTION OF THE PREFERRED EMBODIMENTS

Embodiments of the present invention will be described below with reference to the drawings.

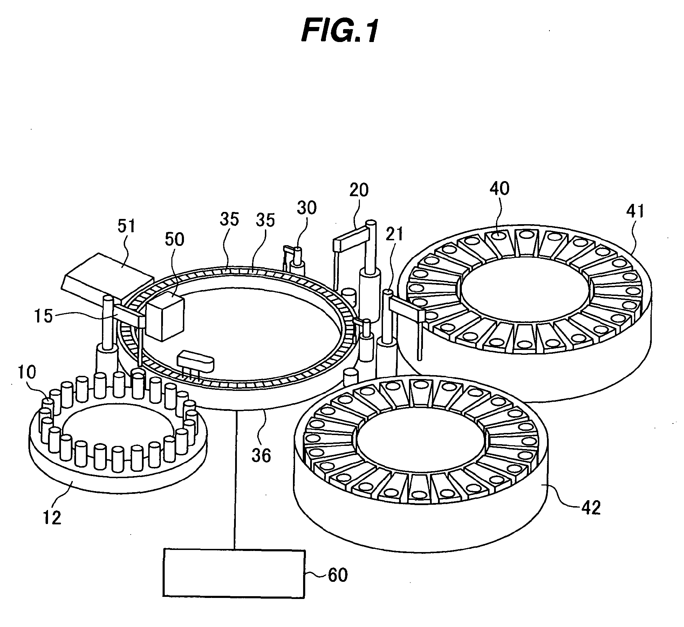

Fig. 1 shows one embodiment of an automatic analyzer to which the present invention is applied.

The automatic analyzer comprise a sample disk 12 on which a plurality of sample cups 10 each containing a sample are mountable; a first reagent disk 41 and a second reagent disk 42 on each of which a plurality of reagent bottles 40 each containing a reagent are mountable; a reaction disk 36 holding a number 160 of reaction cells 35 which are arranged along a disk circumference; a sample probe 15 for sucking the sample from the sample cup 10 and dispensing the sucked sample into the reaction cell 35; a first reagent probe 20 for sucking a reagent from one reagent bottle 40 on the first reagent disk 41 and dispensing the sucked reagent into the reaction cell 35; a second reagent probe 21 for sucking a reagent from another reagent bottle 40 on the second reagent disk 42 and dispensing the sucked reagent into the reaction cell 35; a stirrer 30 for stirring a liquid in the reaction cell 35; a cell washing mechanism 45 for washing the reaction cell 35; a light source 50 and an optical detector 51 which are disposed near an outer periphery of the reaction disk 36; and a controller 60 for controlling the overall operation of the analyzer and executing data exchange with respect to the exterior.

The analyzer of this embodiment operates as follows. A plurality of samples are put in the sample cups 10 and set on the sample disk 12 by an operator. Respective types of analyses required for the individual samples are inputted to the controller 60. The analyzer operates at an operation cycle per 6 seconds. In one operation cycle, the reaction disk 36 rotates clockwise through 119 pitches. One pitch corresponds to one reaction cell.

Reagents used for an analysis are classified into a first reagent to be dispensed after 2 cycles from the dispensing of the sample, a second reagent to be dispensed after 17 cycles, and a third reagent to be dispensed after 48 cycles. The first reagent is held on the first reagent disk 41, while the second reagent and the third reagent are held on the second reagent disk 42. Which one or more of the reagents are to be used are previously decided depending on the type of analysis. There are four cases regarding the use of reagents, i.e., the case using only the first reagent, the case using the first and second reagents, the case using the first and third reagents, and the case using the first, second and third reagents.

When the analysis that is going to be performed at that time is feasible, the controller 60 operates the sample probe 15 to suck the sample from the sample cup 10 and then inject the sucked sample into the reaction cell 35. After 2 cycles from the dispensing of the sample, that reaction cell 35 is moved to an operating position for the first reagent probe 20 where the first reagent probe 20 sucks the reagent corresponding to the requested analysis from the reagent bottle 40 on the first reagent disk 41 and then injects the sucked reagent into the relevant reaction cell 35. In the next cycle, the sample and the reagent are stirred by the stirrer 30. After 17 cycles, the relevant reaction cell 35 is moved to an operating position for the second reagent probe 21. When the relevant analysis requires the second reagent, the second reagent probe 21 sucks the corresponding reagent from the reagent bottle 40 on the second reagent disk 42 and then dispenses the sucked reagent into the relevant reaction cell 35. In the next cycle, the sample and the reagents are stirred by the stirrer 30. After 48 cycles, the relevant reaction cell 35 is moved again to the operating position for the second reagent probe 21. When the relevant analysis requires the third reagent, the second reagent probe 21 sucks the corresponding reagent from the reagent bottle 40 on the second reagent disk 42 and then dispenses the sucked reagent into the relevant reaction cell 35. In the next cycle, the sample and the reagents are stirred by the stirrer 30. During a period of 10 minutes from the dispensing of the first reagent, optical detection is performed and detected data is sent to the controller 60 each time the reaction cell 35 passes a position in front of the optical detector 51. After the lapse of 10 minutes, the cell washing mechanism 45 sucks the reaction liquid in the reaction cell 35 and then washes the reaction cell 35.

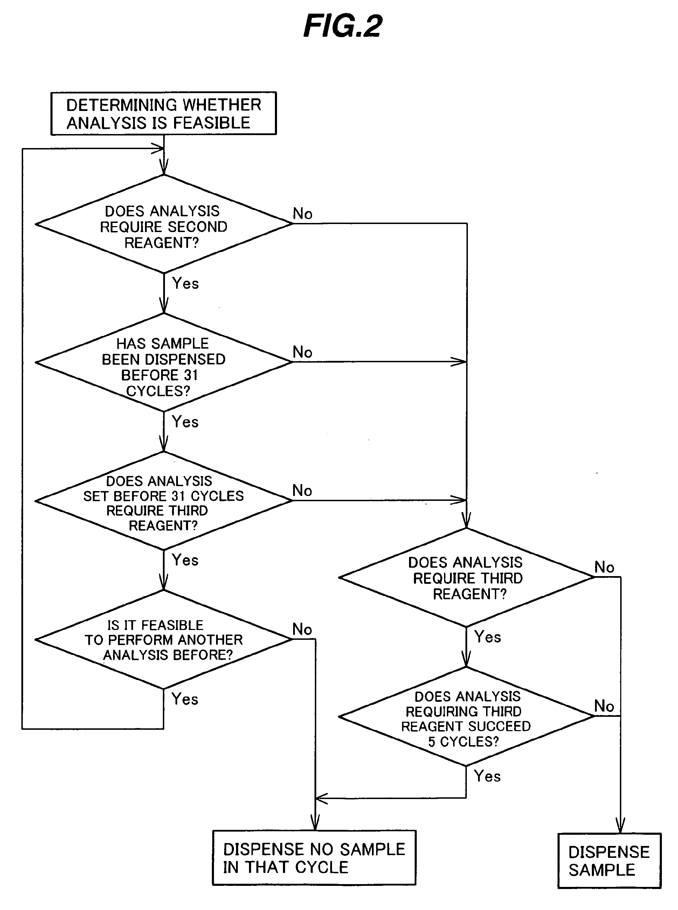

Fig. 2 is a flowchart for decision processing executed in the embodiment to determine whether the analysis is feasible. First, it is determined whether the relevant analysis requires the second reagent. If the second reagent is not required, the processing advances to a determination step on the right side. If the second reagent is required, it is then determined whether the sample has been dispensed before 31 cycles. If the sample has not been so dispensed, the processing advances to the determination step on the right side. If the sample has been so dispensed, it is then determined whether the relevant analysis requires the third reagent. If the third reagent is not required, the processing advances to the determination step on the right side. If the third reagent is required, it is determined whether another analysis can be performed beforehand. If not feasible, no sample is dispensed in that cycle. If feasible, the above-described decision processing is repeated for the other analysis from the first step. If the processing advances to the determination step on the right side, it is determined whether the relevant analysis requires the third reagent. If the third reagent is not required, another sample is dispensed. If the third reagent is required, it is determined whether the dispensing requiring the third reagent succeeds 5 cycles or more. If that dispensing does not succeed 5 cycles or more, another sample is dispensed. If that dispensing succeeds 5 cycles or more, no sample is dispensed in that cycle.

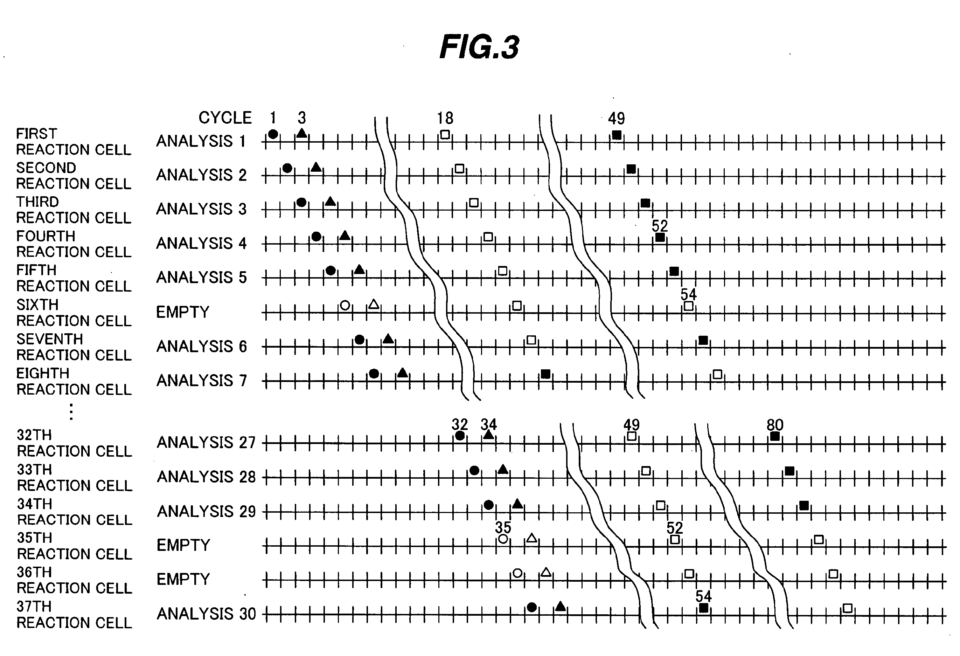

Fig. 3 is a chart for explaining an example of the operation in the embodiment. In Fig. 3, circular, triangular and square marks represent respectively the dispensing operations performed by the sample probe 15, the first reagent probe 20, and the second reagent probe 21. A solid mark represents the case in which the operation is actually performed, and a voided mark represents the case in which the operation is not performed. Into a first reaction cell, a sample for an analysis 1 requiring the first and third reagents is dispensed in a cycle 1, the first reagent is dispensed in a cycle 3, and the third reagent is dispensed in a cycle 49. Into each of second and subsequent reaction cells, a sample and the first and third reagent are dispensed in a similar manner. Because the analyses each requiring the third reagent succeed 5 cycles from the analysis 1 to 5, a sample for an analysis 6 is not dispensed into a sixth reaction cell, but it is dispensed into a seventh reaction cell in the next cycle. An analysis 27 for which a sample is dispensed into a 32nd reaction cell does not require the second reagent, and hence no interference occurs in the cycle 49 with respect to the dispensing of the third reagent into the first reaction cell. An analysis 30 requires the second reagent. Therefore, if a sample for the analysis 30 is dispensed into a 35th reaction cell, interference would occur in a cycle 52 with respect to the dispensing of the third reagent for an analysis 4 into a fourth reaction cell. For that reason, the sample for the analysis 30 is not dispensed into the 35th reaction cell. In a next cycle 53, no sample is dispensed because interference would similarly occur with respect to the dispensing of the third reagent for an analysis 5. An analysis 6 also requires the third reagent. However, because the sixth reaction cell remains empty, there occurs no interference when the sample for the analysis 30 is dispensed into a 37th reaction cell.

In this embodiment, when an analysis requiring the second reagent is performed, it is confirmed at the time of dispensing a sample for the relevant analysis that the analysis corresponding to the cycle before 31 cycles does not require the third reagent. Accordingly, there is no possibility that, in a cycle where the second reagent for the relevant analysis is dispensed after 17 cycles, the reaction cell 35 into which the sample has been dispensed before 48 cycles requires the third reagent. As a result, the second reagent probe 21 is prevented from failing to operate because the second reagent and the third reagent are avoided from being required to be dispensed in the same cycle.

Also, in this embodiment, when the analyses each requiring the third reagent succeed 5 cycles or more, an empty cycle (i.e., a cycle in which no sample is dispensed) is forcibly inserted. Therefore, the number of cycles during which the analysis requiring the second reagent cannot be performed and waits for the start is 5 at maximum. Consequently, an automatic analyzer can be provided in which the analysis is not suspended for a long time and high analysis efficiency is realized.

Further, in this embodiment, a forcible empty cycle is not always inserted one per 5 cycles, namely it is not inserted when an analysis not requiring the third reagent is set during successive five cycles. Therefore, useless insertion of an empty cycle is avoided and an automatic analyzer with high analysis efficiency can be obtained.

Moreover, in this embodiment, even when the analysis requires the second reagent and cannot be performed, another analysis not requiring the second reagent is performed beforehand if feasible. Hence, the generation of useless cycles is suppressed and an automatic analyzer with high analysis efficiency can be obtained.

Furthermore, this embodiment employs a simple algorithm of determining the necessity of the second reagent and the necessity of the third reagent. Accordingly, even when various types of analyses are mixed, an automatic analyzer can be obtained which enables the determination to be performed in a quick and safe manner and which has high reliability.

In another embodiment of the present invention, from among analyses that are feasible in the relevant cycle, the analysis requiring the second reagent is selected and then performed with priority.

In the case of this another embodiment, when plural kinds of analyses are required for each sample, the analysis requiring the second reagent is selected from those analyses and is performed with priority. This reduces a probability that only the analysis requiring the second reagent remains at the end of the analyses for each sample, and hence reduces a probability in generation of useless cycles in which no samples are dispensed. As a result, an automatic analyzer with higher analysis efficiency can be obtained.

Furthermore, this another embodiment increases a possibility that the analysis requiring the second reagent is performed earlier than the analysis requiring the third reagent, and hence reduces a possibility that the analyses each requiring the third reagent succeed 5 cycles or more. Accordingly, the number of times at which empty cycles must be inserted is reduced, and an automatic analyzer with higher analysis efficiency can be obtained.

In still another embodiment of the present invention, the number of cycles in which the analyses each requiring the third reagent are allowed to succeed is changeable.

More specifically, in this still another embodiment, the number of optimum allowable successive cycles can be set depending on a ratio of the number of analyses requiring the second reagent and the number of analyses requiring the third reagent. When the number of analyses requiring the second reagent is about 10 times the number of analyses requiring the third reagent, the number of allowable successive cycles is set to 5, and when the ratio is about 20, it is set to 6. By so setting, the number of cycles becoming in vain is minimized. When the analysis requiring the second reagent and the analysis requiring the third reagent are not mixed, it is advantageous not to set an upper limit in the number of allowable successive cycles for the purpose of reducing the number of cycles becoming in vain. As a result of the above variable setting, an automatic analyzer with higher analysis efficiency can be obtained.

As an alternative, the number of allowable successive cycles for the analysis requiring the third reagent may be automatically changed depending on the kinds of reagents placed in the analyzer. For example, the analyzer automatically sets an upper limit of the number of allowable successive cycles to 6 when a ratio of the number of reagents for the analyses requiring the second reagent and the number of reagents for the analyses requiring the third reagent is 10 or more, and to 5 when the ratio is less than 10. Then, no upper limit is set when those two groups of reagents are not mixed.

In such a modification, since the optimum number of allowable successive cycles is set without consciousness of the operator, it is possible to eliminate the operation required for setting and to avoid a reduction in analysis efficiency caused by setting errors.

In the embodiments described above, there is only one reagent probe used in common for dispensing reagents at plural timings. However, a plurality of reagent probes may be sometimes used for dispensing reagents at plural timings. In such an analyzer, it is preferable that the number of allowable successive cycles be set to different values for the respective reagent probes.

A still another embodiment employs only one reagent probe. In this still another embodiment, the one reagent probe is used to dispense two kinds of reagents, e.g., the first and second reagents or the first and third reagents, during one cycle. In this case, because the second reagent and the third reagent cannot be both dispensed during one cycle as in the above-described embodiment, an upper limit is set to the number of allowable successive cycles for the analyses requiring the third reagent so that the analysis requiring the second reagent can be performed without waiting so long. As a result, suspension of the analysis for a long time can be avoided and analysis efficiency can be increased.

With that still another embodiment, because of using only one reagent probe, an automatic analyzer having a smaller size and a lower cost can be obtained.

## Claims

1. An automatic analyzer comprising:
a plurality of reaction cells;
reaction cell moving means for moving said plurality of reaction cells at a certain cycle;
sample dispensing means for dispensing a sample into a reaction cell on said reaction cell moving means;
reagent dispensing means for dispensing plural kinds of reagents to be added during a sample - reagent reaction process at different timings, the number of the reagent addition timings being larger than the number of times at which the reagents can be dispensed within a time of one cycle; and
control means for controlling said sample dispensing means to set a cycle in which no sample is dispensed by said sample dispensing means, when analyses each using the reagent to be dispensed at the latest one of the reagent addition timings by said reagent dispensing means succeed a predetermined number of times or more.

2. An automatic analyzer according to Claim 1, wherein said predetermined number of times is changeable.

3. An automatic analyzer according to Claim 1, wherein said automatic analyzer has the function of automatically changing said predetermined number of times depending on the kinds of reagents used.

4. An automatic analyzer according to Claim 1, wherein said reagent dispensing means is provided in plural, and said automatic analyzer has the function enabling said predetermined number of times to be set to a different value for each of said plural reagent dispensing means.

5. An automatic analyzer according to Claim 1, wherein said reaction cell moving means is a reaction disk holding said plurality of reaction cells along a circumference of a rotating turntable and rotating through a certain angle per cycle, and
said reagent dispensing means dispenses the reagents into the reaction cells at plural positions on said reaction disk.

6. An analysis method for use in an automatic analyzer comprising:
a plurality of reaction cells;
reaction cell moving means for moving a plurality of reaction cells at a certain cycle;
sample dispensing means for dispensing a sample into a reaction cell on said reaction cell moving means; and
reagent dispensing means for dispensing plural kinds of reagents to be added during a sample - reagent reaction process at different timings, the number of the reagent addition timings being larger than the number of times at which the reagents can be dispensed within a time of one cycle, the method comprising the steps of:
when the sample is dispensed into the reaction cell by using said sample dispensing means, determining whether analyses each using the reagent to be dispensed at the latest one of the reagent addition timings by said reagent dispensing means succeed a predetermined number of times or more; and
if said analyses succeed said predetermined number of times or more, dispensing no sample in a relevant cycle by said sample dispensing means.

7. An analysis method for use in an automatic analyzer according to Claim 6, the method further comprising the steps of:
before the step of dispensing no sample in the relevant cycle by said sample dispensing means, determining the presence or absence of a sample among samples capable of being dispensed in the relevant cycle, for which an analysis using a reagent other than the reagent to be dispensed at the latest reagent addition timing is scheduled; and
if said sample is present, dispensing said sample by said sample dispensing means.
